# EUROPÄISCHE PATENTSCHRIFT

(11) **EP 1 050 438 B1**
(45) Veröffentlichungstag und Bekanntmachung des Hinweises auf die Patenterteilung: **06.11.2002**
(21) Anmeldenummer: 00109420.0
(22) Anmeldetag: 03.05.2000
(51) Int. Cl.: B60R 16/02

(54) **Einführhilfe für einen Kabelbaum**
Wire harness introducing aid
Aide d'introduction pour un faisceau de câbles

(30) Priorität: 03.05.1999 DE 29907792 U
(43) Veröffentlichungstag der Anmeldung: 08.11.2000
(73) Patentinhaber: Langendorf Textil GmbH & Co. KG, 96362 Marktrodach (DE)
(72) Erfinder: Wölfel, Gunther, 95119 Naila (DE)
(74) Vertreter: Eichstädt, Alfred, Dipl.-Ing.

(56) Entgegenhaltungen:
- EP-A- 0 441 511
- US-A- 4 784 886
- US-A- 5 300 337

## Beschreibung

Die vorliegende Erfindung betrifft eine Einführhilfe für einen Kabelbaum, bestehend aus einem Schlauch mit einem dehn- bzw. stauchbaren Mantel aus einem Textilmaterial, wobei der Schlauch ein offenes oberes und ein unteres Ende aufweist.

Derartige Einführhilfen sind allgemein bekannt. Sie werden insbesondere in der Automobilindustrie zum Verlegen von Kabelbäumen in der Autokarosserie eingesetzt.

Die bekannten Einführhilfen arbeiten im wesentlichen schon recht gut. Es ist aber stets ein Kompromiß zwischen der Dehn- bzw. Stauchbarkeit des Mantels und dem Überdekkungsgrad des Kabelbaums durch den Mantel zu schließen. Denn je höher der Überdeckungsgrad, desto niedriger der Dehn- und Stauchfaktor. Ist beispielsweise im Einzelfall eine hohe Dehn- bzw. Stauchbarkeit gefordert, korrespondiert dies mit einem relativ niedrigen Überdeckungsgrad. In solchen Fällen kann es geschehen, daß Kontakte an den Aderenden der Kabel des Kabelbaums durch den Mantel hindurchtreten und beim Verlegen des Kabelbaums trotz Umhüllung durch die Einführhilfe beschädigt werden oder umgekehrt die Kontakte die Karosserie des Kraftfahrzeugs zerkratzen, was später zu Rostschäden führen kann.

Die Aufgabe der vorliegenden Erfindung besteht darin, eine Einführhilfe derart auszugestalten, daß sie trotz eines hohen Überdeckungsgrades eine hohe Dehn- und Stauchbarkeit aufweist.

Die Aufgabe wird dadurch gelöst, daß der Mantel mindestens zwei Lagen des Textilmaterials und an seinem unteren Ende ein längliches, elastisch verbiegbares Einführelement aufweist.

Die Erfindung beruht somit auf der Erkenntnis, daß der Überdeckungsgrad mit der Zahl der Lagen deutlich ansteigt, wohingegen die Dehn- und Stauchbarkeit im wesentlichen unabhängig von der Lagenzahl ist.

Wenn jede der Lagen endlos umlaufend ist, sind die Lagen fertigungstechnisch besonders einfach herstellbar. Darüber hinaus weist der Mantel in diesem Fall keine Schwachstelle in Form einer Naht oder anderen Verbindungsstelle auf.

Wenn die Lagen am oberen Ende ineinander übergehen, ist die Verbindung der Lagen miteinander besonders einfach, wobei gleichzeitig die volle Dehn- und Stauchbarkeit des Mantels am oberen Ende erhalten bleibt.

Wenn das Textilmaterial ein Kunststoffmaterial ist, ist der Mantel besonders robust. Geeignete Kunststoffe sind insbesondere Polyamide, z. B. Polyamid 6.6.

Wenn das Textilmaterial als Geflecht von Textilfäden ausgebildet ist, ist es besonders einfach herstellbar. Darüber hinaus weist ein Geflecht auch bei vergleichsweise hohen Überdeckungsgraden noch eine gute Dehn- und Stauchbarkeit auf.

Die Herstellung des Textilmaterials vereinfacht sich noch weiter, wenn die Textilfäden in Gruppen zu mehreren, insbesondere drei bis sechs, Textilfäden miteinander verflochten sind.

Wenn der Schlauch an seinem unteren Ende ein unteres Halteelement für den Kabelbaum, gegebenenfalls auch an seinem oberen Ende ein oberes Halteelement für den Kabelbaum, aufweist, ist der Kabelbaum im Schlauch besonders einfach fixierbar.

Wenn der Schlauch an seinem unteren Ende geschlossen ist, ist er leichter durch die Karosserie durchführbar.

Weitere Vorteile und Einzelheiten ergeben sich aus der nachfolgenden Beschreibung eines Ausführungsbeispiels in Verbindung mit den Zeichnungen. Dabei zeigen in Prinzipdarstellung
- Figur 1: eine Einführhilfe für einen Kabelbaum,
- Figur 2: einen Schnitt längs der Linie II-II von Figur 1,
- Figur 3: ein Detail einer Lage des Textilmaterials und
- Figur 4: ein oberes Ende im Schnitt.

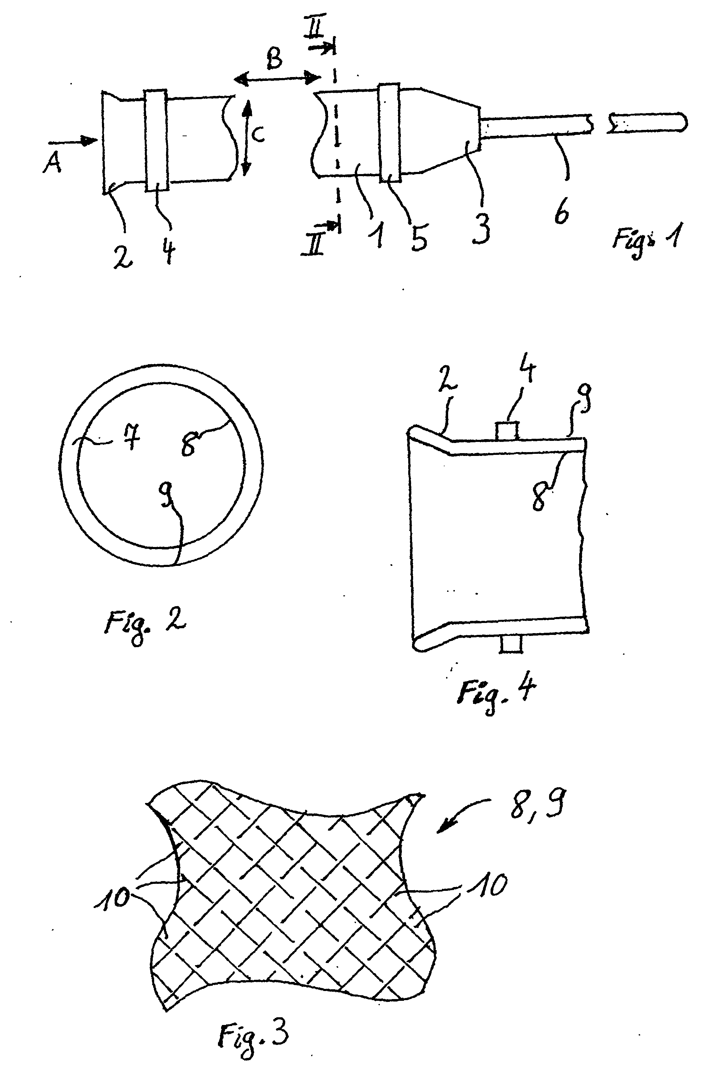

Gemäß Figur 1 weist eine Einführhilfe für einen Kabelbaum einen Schlauch 1 auf. Der Schlauch 1 weist ein offenes oberes Ende 2 auf. An dieser Stelle ist der nicht dargestellte Kabelbaum in den Schlauch 1 einführbar. Dies ist in Figur 1 durch einen Einführpfeil A angedeutet.

Der Schlauch 1 weist ferner ein unteres Ende 3 auf. Am unteren Ende 3 ist der Schlauch 1 geschlossen. Ferner verjüngt sich das untere Ende 3. Dadurch ist ein Verhaken des Schlauchs 1 an etwaigen vorstehenden Karosserieteilen beim Durchführen des Schlauches durch eine Kraftfahrzeugkarosserie praktisch ausgeschlossen. Das Verschließen des unteren Endes 3 kann beispielsweise durch Vernähen oder Verschweißen erfolgen.

An den beiden Enden 2, 3 des Schlauchs sind Halteelemente 4, 5 angeordnet. Die Halteelemente 4, 5 sind beispielsweise als um den Schlauch 1 umlaufende Klettverschlüsse ausgebildet. Mit ihnen ist der Kabelbaum im Inneren des Schlauchs 1 fixierbar und haltbar. Der Kabelbaum kann somit in einer Karosserie verlegt werden, wobei er beim Verlegen durch den Schlauch 1 geschützt wird.

Der Schlauch 1 weist an seinem unteren Ende 3 ein längliches Einführelement 6 auf. Das Einführelement 6 ist elastisch verbiegbar. Es läuft an seinem vorderen, vom Schlauch 1 abgewandten Ende stumpf, insbesondere halbrund, zu. Das Einführelement 6 ist beispielsweise aus Kunststoff, 15 cm bis 50 cm lang, 5 mm bis 15 mm breit und 1 mm bis 3 mm dick.

Gemäß Figur 2 weist der Schlauch 1 einen Mantel 7 auf, der aus mindestens zwei Lagen 8, 9 eines Textilmaterials besteht. Die Lagen 8, 9 sind beide endlos umlaufend, weisen also keine Nahtstelle oder dergleichen auf. Das Textilmaterial ist ein Kunststoffmaterial, beispielsweise ein Polyamid. Als besonders geeignet hat sich Polyamid 6.6 erwiesen.

Gemäß Figur 3 ist das Textilmaterial als Geflecht von Textilfäden ausgebildet. Das Geflecht - und damit im Ergebnis auch der Mantel 7 - ist somit dehn- und stauchbar. Das Ausmaß, in dem das Geflecht dehn- und stauchbar ist, ist vom Überdeckungsgrad des Geflechts abhängig. Die Dehn- und Stauchbarkeit ist in Figur 1 durch Doppelpfeile B, C angedeutet.

Um den Aufwand bei der Herstellung des Geflechts zu reduzieren, sind die Textilfäden nicht einzeln miteinander verpflochten, sondern zu Gruppen 10 zusammengefaßt, welche miteinander verflochten sind. Jede Gruppe weist mehrere Textilfäden auf, z. B. drei bis sechs Textilfäden.

Das Geflecht weist einen vergleichsweise geringen Überdeckungsgrad von z. B. 80 % bis 90 % auf. Es weist somit eine hohe Dehn- und Stauchbarkeit auf. Aufgrund der Überlagerung der Lagen 8, 9 steigt der wirksame Überdeckungsgrad aber auf 96 % bis 99 % an. Die Dehn- und Stauchbarkeit hingegen ändert sich nur unwesentlich.

Wenn, wie in Figur 4 dargestellt, die beiden Lagen 8, 9 am oberen Ende 2 ineinander übergehen, bildet sich am oberen Ende 2 ein Einführtrichter aus. Darüber hinaus bleibt die volle Dehnbarkeit des Schlauches 1 auch am oberen Ende 2 erhalten.

### Bezugszeichenliste

- 1: Schlauch
- 2, 3: Enden
- 4, 5: Halteelemente
- 6: Einführelement
- 7: Mantel
- 8, 9: Lagen
- 10: Gruppen

- A, B, C: Pfeile

## Patentansprüche

1. Einführhilfe für einen Kabelbaum, bestehend aus einem Schlauch (1) mit einem dehn- bzw. stauchbaren Mantel (7) aus einem Textilmaterial, wobei der Schlauch (1) ein offenes oberes und ein unteres Ende (2, 3) aufweist,
**dadurch gekennzeichnet**
**daß** der Mantel (7) mindestens zwei Lagen (8, 9) des Textilmaterials aufweist, und daß
der Schlauch (1) an seinem unteren Ende (3) ein längliches, elastisch verbiegbares Einführelement (6) aufweist.

2. Einführhilfe nach Anspruch 1,
**dadurch gekennzeichnet,**
**daß** jede der Lagen (8, 9) endlos umlaufend ist.

3. Einführhilfe nach Anspruch 1 oder 2,
**dadurch gekennzeichnet,**
**daß** die Lagen (8, 9) am oberen Ende (2) ineinander übergehen.

4. Einführhilfe nach Anspruch 1, 2 oder 3,
**dadurch gekennzeichnet,**
**daß** das Textilmaterial ein Kunststoffmaterial ist.

5. Einführhilfe nach Anspruch 4,
**dadurch gekennzeichnet,**
**daß** das Textilmaterial aus Polyamid, insbesondere aus Polyamid 6.6, besteht.

6. Einführhilfe nach einem der obigen Ansprüche,
**dadurch gekennzeichnet,**
**daß** das Textilmaterial als Geflecht von Textilfäden ausgebildet ist.

7. Einführhilfe nach Anspruch 6,
**dadurch gekennzeichnet,**
**daß** die Textilfäden in Gruppen (10) zu mehreren, insbesondere drei bis sechs, Textilfäden miteinander verflochten sind.

8. Einführhilfe nach einem der obigen Ansprüche,
**dadurch gekennzeichnet,**
**daß** der Schlauch (1) an seinem unteren Ende (3) ein unteres Halteelement (5) für den Kabelbaum aufweist.

9. Einführhilfe nach einem der obigen Ansprüche,
**dadurch gekennzeichnet,**
**daß** der Schlauch (1) an seinem unteren Ende (3) geschlossen ist.

10. Einführhilfe nach einem der obigen Ansprüche,
**dadurch gekennzeichnet,**
**daß** der Schlauch (1) an seinem oberen Ende (2) ein oberes Halteelement (4) für den Kabelbaum aufweist.

## Claims

1. Insertion aid for a cable loom, consisting of a hose (1) with a stretchable or compressible sheath (7) of a textile material, wherein the hose (1) has an open upper end (2) and a lower end (3), **characterised in that** sheath (7) comprises at least two layers (8, 9) of the textile material and that the hose (1) has at its lower end (3) an elongate, elastically flexible introducing element (6).

2. Insertion aid according to claim 1, **characterised in that** each of the layers (8, 9) extends around endlessly.

3. Insertion aid according to claim 1 or 2, **characterised in that** the layers (8, 9) merge into one another at the upper end (2).

4. Insertion aid according to claim 1, 2 or 3, **characterised in that** the textile material is a synthetic material.

5. Insertion aid according to claim 4, **characterised in that** the textile material consists of polyamide, particularly of polyamide 6.6.

6. Insertion aid according to one of the above claims, **characterised in that** the textile material is formed as a weave of textile threads.

7. Insertion aid according to claim 6, **characterised in that** the textile threads are interwoven in groups (10) into several, particularly three two six, textile threads.

8. Insertion aid according to one of the above claims, **characterised in that** the hose (1) has at its lower end (3) a lower holding element (5) for the cable loom.

9. Insertion aid according to one of the above claims, **characterised in that** the hose (1) is closed at its lower end (3).

10. Insertion aid according to one of the above claims, **characterised in that** the hose (1) has at its upper end (2) an upper holding element (4) for the cable loom.

## Revendications

1. Accessoire de pose pour un faisceau de câbles, comprenant un tuyau souple (1) avec une gaine (7) extensible et compressible, réalisée dans un matériau textile, sachant que le tuyau souple (1) comporte une extrémité supérieure ouverte et une extrémité inférieure (2, 3), **caractérisé en ce que** la gaine (7) est formée par au moins deux couches (8, 9) du matériau textile et **en ce que** le tuyau souple (1) comporte sur son extrémité inférieure (3) un élément d'insertion (6) allongé, élastiquement flexible.

2. Accessoire de pose selon la revendication 1, **caractérisé en ce que** chacune des couches (8, 9) forme une couche concentrique continue.

3. Accessoire de pose selon la revendication 1 ou 2, **caractérisé en ce que** les couches (8, 9) se fondent l'une dans l'autre sur l'extrémité supérieure (2).

4. Accessoire de pose selon la revendication 1, 2 ou 3, **caractérisé en ce que** le matériau textile est une matière plastique.

5. Accessoire de pose selon la revendication 4, **caractérisé en ce que** le matériau textile est réalisé en polyamide, en particulier en polyamide 6.6.

6. Accessoire de pose selon une des revendications précédentes, **caractérisé en ce que** le matériau textile est formé par un entrelacement de fils textiles.

7. Accessoire de pose selon la revendication 6, **caractérisé en ce que** les fils textiles sont entrelacés par groupes (10), formés par plusieurs, en particulier trois à six fils textiles.

8. Accessoire de pose selon une des revendications précédentes, **caractérisé en ce que** le tuyau souple (1) est muni sur son extrémité inférieure (3) d'un élément de retenue inférieur (5) pour le faisceau de câbles.

9. Accessoire de pose selon une des revendications précédentes, **caractérisé en ce que** le tuyau souple (1) est fermé sur son extrémité inférieure (3).

10. Accessoire de pose selon une des revendications précédentes, **caractérisé en ce que** le tuyau souple (1) est muni sur son extrémité supérieure (2) d'un élément de retenue supérieur (4) pour le faisceau de câbles.
